# EUROPÄISCHE PATENTSCHRIFT

(11) **EP 4 516 534 B1**
(45) Veröffentlichungstag und Bekanntmachung des Hinweises auf die Patenterteilung: **29.04.2026**
(21) Anmeldenummer: 24193234.2
(22) Anmeldetag: 07.08.2024
(51) Int. Cl.: B60C 11/13

(54) **FAHRZEUGREIFEN**
VEHICLE TYRE
PNEUMATIQUE POUR VÉHICULES

(30) Priorität: 04.09.2023 DE 102023208482
(43) Veröffentlichungstag der Anmeldung: 05.03.2025
(73) Patentinhaber: Continental Reifen Deutschland GmbH, 30175 Hannover (DE)
(72) Erfinder: Özüduru, Ahmet, 30175 Hannover (DE); Soyyuece, Atakan, 30175 Hannover (DE); Ecke, Stefan, 30175 Hannover (DE)
(74) Vertreter: Continental Corporation

(56) Entgegenhaltungen:
- KR-A- 20220 169 213
- US-A- 3 727 661
- US-A1- 2020 047 563
- US-B2- 7 004 216

## Beschreibung

Die Erfindung betrifft einen Fahrzeugreifen gemäß dem Oberbegriff des Anspruches 1.

Fahrzeugreifen, insbesondere Fahrzeugluftreifen, weisen herkömmlicherweise in Umfangsrichtung verlaufende Profilblockreihen auf, die durch mehrere in Umfangsrichtung verlaufende Umfangsrillen (zentrale Umfangsrille, schulterseitige Umfangsrillen) voneinander getrennt sind. In die Umfangsrillen münden beispielsweise v-förmig bzw. angewinkelt in Querrichtung verlaufende Querrillen ein, die die Profilblockreihen zusätzlich in die einzelnen Profilblöcke unterteilen. Dadurch wird ein bestimmtes Reifenprofil ausgebildet.

Für eine gute Schneeperformance eines Reifenprofils kommt es insbesondere auf Schnee-Schnee-Reibung an, d.h. auf Reibung zwischen dem im Reifenprofil gehaltenen Schnee und der Schneeschicht auf der Fahrbahn. Bei den Umfangsrillen kann der Schnee beim Fahren auf loser Schneeoberfläche unter einem wirkenden Antriebs- bzw. Bremsmoment nicht in den Umfangsrillen gehalten werden, wobei der Schnee bei auftretendem Schlupf in den Umfangsrillen rutscht und daher nicht zur Traktionsverbesserung durch Schnee-Schnee Reibung genutzt werden kann.

In EP 3 068 634 B1 ist vorgesehen, in den Rillenflanken der schulterseitigen Umfangsrillen in symmetrischer Weise Taschenregionen mit Verzahnungen vorzusehen, wobei die Taschenregionen derartig angewinkelt in den Rillenflanken eingelassen sind, dass die Spitzen der Verzahnungen im Wesentlichen lotrecht zum Rillengrund verlaufen.

In DE 689 06 731 T2 ist vorgesehen, dass die Profilblöcke an ihren den Umfangsrillen zugewandten Seitenwänden, die auch die Rillenflanken der Umfangsrillen bilden, mit Seitennuten versehen sind, die auf jeder Rillenflanke identisch ausgeführt sind. Die Seitennuten besitzen ein zu der jeweiligen Umfangsnut hin und nach oben hin offenes Ende. Die Seitennuten dienen der Erhöhung der Anzahl an Kanten jedes Profilblockes, was zur Traktionsverbesserung auf Schnee (Schneekratzwirkung) beiträgt.

In EP 1 987 965 B1 oder EP 1 995 080 B1 ist ebenfalls beschrieben, in den Profilblöcken an den den zentralen Umfangsrillen zugewandten Rillenflanken Kerben bzw. Nuten als negativen Raum im Profilblock einzubringen, wobei die Nuten auf beiden Rillenflanken gleichmäßig entlang der Umfangsrille verteilt sind und dabei auf unterschiedlichen Rillenflanken als spiegelverkehrte Abbilder ausgeführt sind.

Auch in EP 3 600 919 A1 ist vorgesehen, in den Profilblöcken an den den zentralen Umfangsrillen zugewandten Rillenflanken Kerben bzw. Nuten einzubringen.

Weitere Fahrzeugreifen mit einer Laufstreifenprofilierung sind in US 2020/047563 A1, KR 2022 0169213 A, US 3 727 661 A und US 7 004 216 B2 beschrieben.

Der folgenden Erfindung liegt die Aufgabe zugrunde, einen Fahrzeugreifen bereitzustellen, mit dem in einfacher Weise eine gute Schneeperformance, insbesondere eine gute Schnee-Schnee-Reibung bereitgestellt werden kann.

Diese Aufgabe wird durch einen Fahrzeugreifen gemäß dem unabhängigen Anspruch gelöst. Die Unteransprüche geben bevorzugte Weiterbildungen an.

Demnach ist ein Fahrzeugreifen mit einem Laufstreifen vorgesehen, wobei der Laufstreifen mindestens eine Umfangsrille aufweist, die sich in Umfangsrichtung erstreckt, wobei an die mindestens eine Umfangsrille in Querrichtung beidseitig Profilblöcke angrenzen, die eine Profilsteifigkeit aufweisen, wobei in zumindest einer Umfangsrille
- an einer ersten Rillenflanke in Umfangsrichtung verteilt erste Zahnstrukturen voneinander beabstandet angeordnet sind, und
- an einer zweiten Rillenflanke in Umfangsrichtung verteilt zweite Zahnstrukturen voneinander beabstandet angeordnet sind, wobei
- die ersten Zahnstrukturen jeweils eine erste Zahnfläche aufweisen, die von der ersten Rillenflanke absteht oder hervorsteht, und
- die zweiten Zahnstrukturen jeweils eine zweite Zahnfläche aufweisen, die von der zweiten Rillenflanke absteht oder hervorsteht,
wobei die erste Zahnfläche und die zweite Zahnfläche jeweils in radialer Richtung konkav gekrümmt sind.

Gemäß der Erfindung werden also von der jeweiligen Umfangsrille abstehende oder hervorstehende Zahnstrukturen ausgebildet, die in einem gewissen Abstand von einigen Millimetern in Umfangsrichtung zueinander beabstandet sind, wodurch auch in der jeweiligen Umfangsrille aufgenommener Schnee gehalten werden kann. Der in der Umfangsrille befindliche Schnee rutscht also bei einem Antriebs- oder Bremsmoment nicht in Umfangsrichtung durch die jeweilige Umfangsrille durch, sondern wird von im Wesentlichen senkrecht oder leicht angewinkelt zur Umfangsrichtung ausgerichteten Seitenwänden, durch die die Zahnflächen von der jeweiligen Rillenflanke abheben oder hervorstehen, blockiert. **In** der jeweiligen Umfangsrille werden also bereichsweise Erhebungen oder Blockierzähne ausgebildet. Da die Zahnflächen in radialer Richtung konkav gekrümmt sind, sind auch weiterhin gute Drainageeigenschaften der jeweilige Umfangsrille gegeben, da Wasser in Umfangsrichtung auch weiterhin gut abfließen kann.

Erfindungsgemäß ist weiterhin vorgesehen, dass die erste Zahnstruktur in Umfangsrichtung eine erste Zahnbreite und eine erste Zahnhöhe über der ersten Rillenflanke aufweist, und die zweite Zahnstruktur in Umfangsrichtung eine zweite Zahnbreite und eine zweite Zahnhöhe über der zweiten Rillenflanke aufweist. Durch die Zahnbreite und die Zahnhöhe können die Eigenschaften der Zahnstrukturen eingestellt werden, wie beispielsweise eine Steifigkeit. Dabei kann beispielsweise vorgesehen sein, dass eine erste Steifigkeit der ersten Zahnstruktur an die Profilsteifigkeit eines an die erste Rillenflanke der jeweiligen Umfangsrille angrenzenden Profilblocks angepasst ist, und eine zweite Steifigkeit der zweiten Zahnstruktur an eine Profilsteifigkeit eines an die zweite Rillenflanke der jeweiligen Umfangsrille angrenzenden Profilblocks angepasst ist. Die erste Steifigkeit der ersten Zahnstruktur und/oder die zweite Steifigkeit der zweiten Zahnstruktur können dabei in Abhängigkeit der jeweiligen Zahnbreite und/oder der jeweiligen Zahnhöhe alternativ oder ergänzend aber auch in Abhängigkeit des Materials der jeweiligen Zahnstrukur eingestellt werden.

Dadurch kann in flexibler Weise eine harmonische Verteilung der Steifigkeiten erreicht werden, da die einzelnen Komponenten in ihrer Steifigkeit aneinander angepasst sind, was wiederum zu einem gleichmäßigen Abrieb des Fahrzeugreifens bzw. des Laufstreifens führt. Dabei kann insbesondere vorgesehen sein, dass die Steifigkeiten derartig aneinander angepasst sind, dass unter ETRTO-Bedingungen (ETRTO - European Tyre and Rim Technical Organisation) die Druckunterschiede an gegenüberliegenden Blockkanten eines Profilblocks in der Reifenaufstandsfläche maximal 80 N/cm² betragen.

Dabei ist vorzugsweise vorgesehen, dass die mindestens eine Umfangsrille eine zentrale Umfangsrille ist, wobei sich die zentrale Umfangsrille benachbart zu einer Äquatorialebene des Fahrzeugreifens in Umfangsrichtung erstreckt, wobei (bei gleicher Materialwahl)
- die erste Zahnbreite der ersten Zahnstruktur und die zweite Zahnbreite der zweiten Zahnstruktur im Wesentlichen identisch sind, und/oder
- die erste Zahnhöhe der ersten Zahnstruktur und die zweite Zahnhöhe der zweiten Zahnstruktur im Wesentlichen identisch sind.

Durch identisch ausgeführte Zahnstrukturen wird also erreicht, dass deren Steifigkeiten in etwa identisch sind und gleichzeitig an die angrenzenden Profilblöcke angepasst sind. Dabei ist vorzugsweise vorgesehen, dass an die zentrale Umfangsrille in Querrichtung zu beiden Seiten hin mittlere Profilblöcke angrenzen, wobei die mittleren Profilblöcke im Wesentlichen identische Profilsteifigkeiten aufweisen.

Erfindungsgemäß ist weiterhin vorgesehen, dass die mindestens eine Umfangsrille eine schulterseitige Umfangsrille ist, wobei sich die schulterseitige Umfangsrille im Bereich einer Reifenschulter des Fahrzeugreifens in Umfangsrichtung erstreckt, wobei (bei gleicher Materialwahl)
- die erste Zahnbreite der ersten Zahnstruktur und die zweite Zahnbreite der zweiten Zahnstruktur unterschiedlich sind, insbesondere die erste Zahnbreite geringer ist als die zweite Zahnbreite, und/oder
- die erste Zahnhöhe der ersten Zahnstruktur und die zweite Zahnhöhe der zweiten Zahnstruktur unterschiedlich sind, insbesondere die erste Zahnhöhe geringer ist als die zweite Zahnhöhe.

Durch die unterschiedlich ausgeführten Zahnstrukturen wird erreicht, dass sich deren Steifigkeiten unterscheiden und gleichzeitig an die angrenzenden Profilblöcke angepasst sind. Dabei ist vorzugsweise vorgesehen, dass an die schulterseitige Umfangsrille in Querrichtung laufstreifeninnenseitig mittlere Profilblöcke und in Querrichtung laufstreifenaußenseitig schulterseitige Profilblöcke angrenzen, wobei eine Profilsteifigkeit der mittleren Profilblöcke geringer ist als eine Profilsteifigkeit der schulterseitigen Profilblöcke.

Im Rahmen der Erfindung wird unter zentralseitig oder laufstreifeninnenseitig verstanden, dass das jeweilige Element am jeweiligen Bauteil zur Äquatorialebene hin bzw. nach innen bzw. zur zentralen Umfangsrille hin ausgerichtet ist. Schulterseitig oder laufstreifenaußenseitig bedeutet dementsprechend eine Ausrichtung nach außen zur Laufstreifenaußenseite bzw. zu einer Reifenschulter des Fahrzeugreifens hin.
- Fig. 1: einen Ausschnitt eines Reifenprofils eines Fahrzeugreifens;
- Fig. 2: eine Detailansicht einer schulterseitigen Umfangsrille des Reifenprofils aus Fig. 1;
- Fig. 3A, 3B: unterschiedliche Schnittansichten durch die Umfangsrille gemäß Fig. 2; und
- Fig. 4: eine Detailansicht einer zentralen Umfangsrille des Reifenprofils aus Fig. 1.

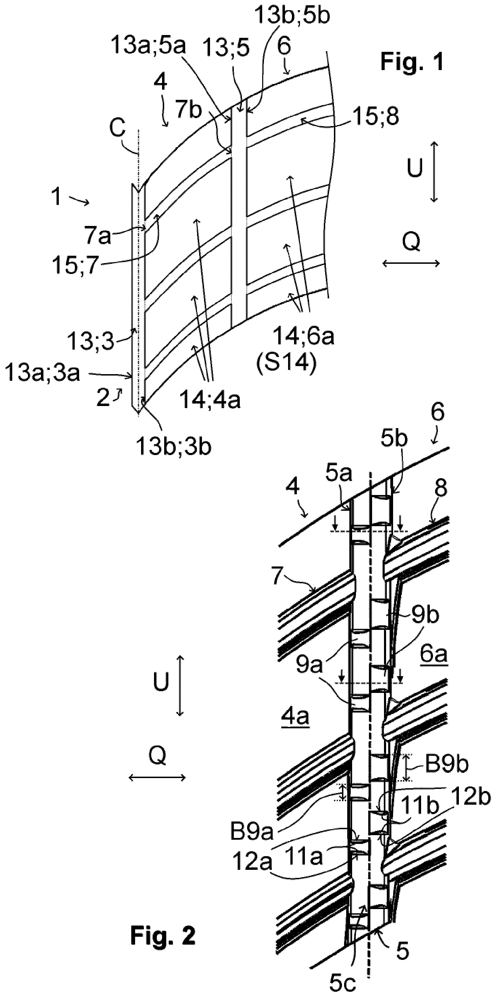

Figur 1 zeigt schematisch einen Ausschnitt eines Laufstreifens 1 eines Fahrzeugreifens 2, insbesondere Fahrzeugluftreifens, wobei lediglich eine Laufstreifenhälfte dargestellt ist. Die nicht dargestellte Laufstreifenhälfte ist vergleichbar dazu aufgebaut, vorzugsweise spiegelsymmetrisch dazu. Das dargestellte Reifenprofil des Laufstreifens 1 wird dadurch ausgebildet, dass entlang der Äquatorialebene C des Fahrzeugreifens 1 eine in der Draufsicht lineare und in Umfangsrichtung U verlaufende zentrale Umfangsrille 3 vorgesehen ist. An diese zentrale Umfangsrille 3 grenzt in Querrichtung Q eine mittlere Profilblockreihe 4 an, die von ihrer anderen Seite von einer schulterseitigen Umfangsrille 5 begrenzt wird. An die schulterseitige Umfangsrille 5 grenzt dann eine schulterseitige Profilblockreihe 6 an.

Alternativ könnten auch zwei zentrale Umfangsrillen 3 vorgesehen sein, die in Querrichtung Q versetzt zueinander auf unterschiedlichen Seiten der Äquatorialebene C liegen (nicht dargestellt), wobei zwischen beiden zentralen Umfangsrillen 3 dann eine weitere Profilblockreihe (nicht dargestellt) verläuft.

Zwischen der zentralen Umfangsrille 3 und der schulterseitigen Umfangsrille 5 verlaufen parallel zueinander mittlere Querrillen 7, die die mittlere Profilblockreihe 4 in mittlere Profilblöcke 4a unterteilt. Die mittleren Querrillen 7 münden dabei mit ihren zentralseitigen Enden 7a in die zentrale Umfangsrille 3 und mit ihren schulterseitigen Enden 7b in die schulterseitige Umfangsrille 5 ein. Dabei verlaufen die mittleren Querrillen 7 in Querrichtung Q v-förmig oder angewinkelt zwischen den beiden Umfangsrillen 3, 5.

In vergleichbarer Weise wird die schulterseitige Profilblockreihe 6 durch schulterseitige Querrillen 8 in schulterseitige Profilblöcke 6a unterteilt, wobei die schulterseitigen Querrillen 8 in Querrichtung Q von außen (laufstreifenaußenseitig) in die schulterseitige Umfangsrille 5 münden. Die schulterseitigen Querrillen 8 verlaufen von der schulterseitigen Umfangsrille 5 ausgehend in Querrichtung Q ebenfalls v-förmig oder angewinkelt zur Laufstreifenaußenseite hin, wobei die schulterseitigen Querrillen 8 in der dargestellten Ausführungsform weniger stark gegenüber der Querrichtung Q angewinkelt sind als die mittleren Querrillen 7. Für die mittleren Querrillen 7 kann beispielweise eine Anwinkelung von 30° bis 55°, insbesondere von zumindest 45°, vorgesehen sein und für die schulterseitigen Querrillen 7 von zwischen 5° bis 20°.

Die schulterseitigen Umfangsrillen 5 weisen wie in Fig. 2 dargestellt
- auf ihren (laufstreifeninnenseitigen) ersten Rillenflanken 5a jeweils voneinander in Umfangsrichtung U beabstandete (laufstreifeninnenseitige) erste Zahnstrukturen 9a und
- auf ihren (laufstreifenaußenseitigen) zweiten Rillenflanken 5b jeweils voneinander in Umfangsrichtung U beabstandete (laufstreifenaußenseitige) zweite Zahnstrukturen 9b auf.

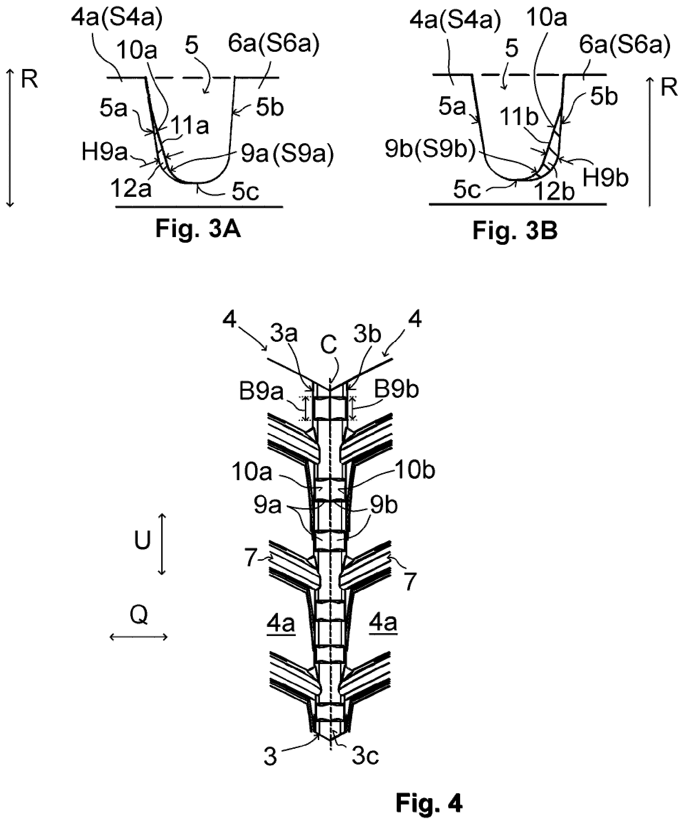

Diese Zahnstrukturen 9a, 9b werden jeweils durch eine in radialer Richtung R konkav gekrümmte erste Zahnfläche 10a bzw. in radialer Richtung R konkav gekrümmte zweite Zahnfläche 10b gebildet. Wie in den Schnittansichten in Fig. 3A (oberer Schnittlinie aus Fig. 2) und Fig. 3B (untere Schnittlinie in Fig. 2) dargestellt, geht die jeweilige Zahnfläche 10a, 10b in Querrichtung Q auf einer Seite in einen Rillengrund 5c der schulterseitigen Umfangsrille 5 und zur anderen Seite hin in die jeweilige Rillenflanke 5a, 5b über. In Umfangsrichtung U wird die erste Zahnfläche 10a beidseitig durch erste Kanten 11a und die zweite Zahnfläche 10b beidseitig durch zweite Kanten 11b begrenzt. An die ersten Kanten 11a schließen sich in Umfangsrichtung U erste Seitenwände 12a und an die zweiten Kanten 11b in Umfangsrichtung U zweite Seitenwände 12b an, die vorzugsweise senkrecht von der ersten Rillenflanke 5a bzw. der zweiten Rillenflanke 5b abstehen. Dadurch ist die jeweilige Zahnfläche 10a, 10b gegenüber der jeweiligen Rillenflanke 5a, 5b angehoben bzw. steht von dieser hervor.

Im dargestellten Ausführungsbeispiel wird die jeweilige Zahnstruktur 9a, 9b also nach oben hin durch die jeweilige Zahnfläche 10a, 10b und in Umfangsrichtung U durch die jeweiligen Seitenwände 12a, 12b begrenzt, die von den Rillenflanken 5a, 5b abstehen. Ferner liegen die jeweiligen Zahnstrukturen 9a, 9b in Umfangsrichtung U versetzt zu den in die schulterseitige Umfangsrille 5 einmündenden Querrillen 7, 8, um deren Eigenschaften und Funktion nicht zu beeinträchtigen. An die Zahnstrukturen 9a, 9b grenzt also in (eine) Querrichtung Q immer auf der vollen Breite ein Profilblock 4a, 6a an.

Durch das hervorstehende Profil der Zahnstrukturen 9a, 9b kann auch in der schulterseitigen Umfangsrille 5 aufgenommener Schnee gehalten werden, da dieser bei einem Antriebs- oder Bremsmoment nicht in Umfangsrichtung U durch die schulterseitige Umfangsrille 5 durchrutscht, sondern von den im Wesentlichen senkrecht zur Umfangsrichtung U ausgerichteten Seitenwänden 12a, 12b zumindest teilweise blockiert wird. Durch die in radialer Richtung R konkave Krümmung der Zahnflächen 10a, 10b ist auch weiterhin eine gute Drainageeigenschaft der schulterseitigen Umfangsrille 5 gegeben.

Um mit diesen Zahnstrukturen 9a, 9b eine optimal verteilte Profilsteifigkeit und damit eine gleichmäßige Abriebeigenschaft zu erzielen, sind Zahnbreiten B9a, B9b und Zahnhöhen H9a, H9b der Zahnstrukturen 9a, 9b wie folgt gewählt:
Die erste Zahnstruktur 9a an der laufstreifeninnenseitigen ersten Rillenflanke 5a weist in Umfangsrichtung U eine erste Zahnbreite B9a auf, die geringer ist als eine zweite Zahnbreite B9b der zweiten Zahnstruktur 9b an der laufstreifenaußenseitigen zweiten Rillenflanke 5b. Gleichzeitig ist auch eine erste Zahnhöhe H9a der ersten Zahnstruktur 9a, d.h. eine lichte Höhe über der ersten Rillenflanke 5a, geringer als eine zweite Zahnhöhe H9b der zweiten Zahnstruktur 9b, d.h. eine lichte Höhe über der zweiten Rillenflanke 5b.

Dadurch weisen die ersten Zahnstrukturen 9a eine erste Steifigkeit S9a auf, die geringer ist als eine zweite Steifigkeit S9b der zweiten Zahnstrukturen 9b. Dies resultiert daraus, dass die schulterseitigen Profilblöcke 6a, an die die zweiten Zahnstrukturen 9b mit der höheren zweiten Steifigkeit S9b angrenzen, eine Profilsteifigkeit S6a aufweisen, die größer ist als eine Profilsteifigkeit S4a der mittleren Profilblöcke 4a, an die die weniger steifen ersten Zahnstrukturen 9a angrenzen.

Die Steifigkeit S9a, S9b der Zahnstrukturen 9a, 9b ist also an die Profilsteifigkeit S4a, S6a der jeweils angrenzenden Profilblöcke 4a, 6a angepasst. Ergänzend oder alternativ zu der Wahl von unterschiedlichen Zahnbreiten B9a, B9b und Zahnhöhen H9a, H9b können auch unterschiedliche Materialien mit unterschiedlichen Festigkeitseigenschaften für die jeweilige Zahnstruktur 9a, 9b gewählt werden, um eine an die Profilsteifigkeit S4a, S6a der jeweils angrenzenden Profilblöcke 4a, 6a angepasste Steifigkeit S9a, S9b der jeweiligen Zahnstruktur 9a, 9b zu erreichen.

Wie in dem Ausschnitt in Fig. 2 dargestellt, sind die ersten Zahnstrukturen 9a in Umfangsrichtung U versetzt zu den zweiten Zahnstrukturen 9b angeordnet, was jedoch nicht zwingend ist. So kann die mittlere Profilblockreihe 4 im Rahmen einer Optimierung des Reifenprofils auch in Umfangsrichtung U gegenüber der schulterseitigen Profilblockreihe 6 verdreht sein, wodurch sich auch die ersten und zweiten Zahnstrukturen 9a, 9b in Umfangsrichtung U gegeneinander verdrehen und dann unter Umständen in Querrichtung Q auch aneinander angrenzen können.

In vergleichbarer Weise zu der schulterseitigen Umfangsrille 5 kann auch die zentrale Umfangsrille 3 wie in Fig. 4 dargestellt
- auf ihrer ersten Rillenflanke 3a voneinander in Umfangsrichtung U beabstandete erste Zahnstrukturen 9a und
- auf ihrer zweiten Rillenflanke 3b voneinander in Umfangsrichtung U beabstandete zweite Zahnstrukturen 9b aufweisen.

Auch diese Zahnstrukturen 9a, 9b weisen in radialer Richtung R konkav gekrümmte erste bzw. zweite Zahnflächen 10a, 10b auf, die in Umfangsrichtung durch erste Kanten 11a und zweite Kanten 11b begrenzt sind. An die ersten Kanten 11a schließen sich erste Seitenwände 12a und an die zweiten Kanten 11b zweite Seitenwände 12b an, die vorzugsweise senkrecht von der ersten Rillenflanke 3a bzw. der zweiten Rillenflanke 3b der zentralen Umfangsrille 3 abstehen. Die jeweilige Zahnfläche 10a, 10b ist also auch gegenüber der jeweiligen Rillenflanke 3a, 3b der zentralen Umfangsrille 3 angehoben bzw. steht von dieser hervor, während sie in Querrichtung Q auf einer Seite in einen Rillengrund 3c der zentralen Umfangsrille 3 und zur anderen Seite hin in die jeweilige Rillenflanke 3a, 3b übergeht.

Die vorteilhaften Eigenschaften bezüglich der Schnee-Schnee-Reibung ergeben sich demzufolge auch bei diesen Zahnstrukturen 9a, 9b in der zentralen Umfangsrille 3, die für ein Halten von Schnee und durch die konkave Krümmung auch weiterhin für gute Drainageeigenschaften sorgen können.

Im Unterschied zu der Ausführung in der schulterseitigen Umfangsrille 5 sind die Zahnbreiten B9a, B9b und Zahnhöhen H9a, H9b der Zahnstrukturen 9a, 9b in der zentralen Umfangsrille 3 vorzugsweise identisch. Dies folgt daraus, dass die an die zentrale Umfangsrille 3 in Querrichtung Q angrenzenden mittleren Profilböcke 4a auf beiden Seiten dieselbe Profilsteifigkeit S4a aufweisen. Demzufolge sind für eine Optimierung der Profilsteifigkeit und einen gleichmäßigen Abrieb auch symmetrisch verteilte Steifigkeiten S9a, S9b für die Zahnstrukturen 9a, 9b vorzugsehen, beispielsweise durch identisch ausgeführte Zahnbreiten B9a, B9b bzw. Zahnhöhen H9a, H9b und/oder durch eine entsprechende Materialwahl.

Allgemein ist also mindestens eine Umfangsrille 13 in dem Laufstreifen 1 vorhanden, wobei in dieser mindestens einen Umfangsrille 13 an den jeweiligen ersten Rillenflanken 13a bzw. zweiten Rillenflanken 13b die beschriebenen ersten bzw. zweiten Zahnstrukturen 9a, 9b angeordnet sind, deren Steifigkeit S9a, S9b in entsprechender Weise an die Profilsteifigkeit S14 des jeweils in Querrichtung Q angrenzenden Profilblocks 14, der durch die jeweiligen Querrillen 15 ausgebildet wird, angepasst ist.

### Bezugszeichenliste

- 1: Laufstreifen
- 2: Fahrzeugreifen
- 3: zentrale Umfangsrille
- 3a: erste Rillenflanke der zentralen Umfangsrille 3
- 3b: zweite Rillenflanke der zentralen Umfangsrille 3
- 4: mittlere Profilblockreihe
- 4a: mittlerer Profilblock
- 5: schulterseitige Umfangsrille
- 5a: erste Rillenflanke der schulterseitigen Umfangsrille 5
- 5b: zweite Rillenflanke der schulterseitigen Umfangsrille 5
- 6: schulterseitige Profilblockreihe
- 6a: schulterseitiger Profilblock
- 7: mittlere Querrille
- 7a: zentralseitiges Ende der mittleren Querrille 7
- 7b: schulterseitiges Ende der mittleren Querrille 7
- 8: schulterseitige Querrille
- 9a: erste Zahnstruktur
- 9b: zweite Zahnstruktur
- 10a: erste Zahnfläche
- 10b: zweite Zahnfläche
- 11a: erste Kante
- 11b: zweite Kante
- 12a: erste Seitenwand
- 12b: zweite Seitenwand
- 13: Umfangsrille
- 13a: erste Rillenflanke der Umfangsrille 13
- 13b: zweite Rillenflanke der Umfangsrille 13
- 14: Profilblock
- 15: Querrille
- B9a: erste Zahnbreite der ersten Zahnstruktur 9a
- B9b: zweite Zahnbreite der zweiten Zahnstruktur 9b
- C: Äquatorialebene
- H9a: erste Zahnhöhe der ersten Zahnstruktur 9a
- H9b: zweite Zahnhöhe der zweiten Zahnstruktur 9b
- Q: Querrichtung
- R: radiale Richtung
- S4a: Profilsteifigkeit des mittleren Profilblocks 4a
- S6a: Profilsteifigkeit des schulterseitigen Profilblocks 6a
- S9a: erste Steifigkeit der ersten Zahnstruktur 9a
- S9b: zweite Steifigkeit der zweiten Zahnstruktur 9b
- S14: Profilsteifigkeit des Profilblocks 14
- U: Umfangsrichtung

## Patentansprüche

1. Fahrzeugreifen (2) mit einem Laufstreifen (1), wobei der Laufstreifen (1) mindestens eine Umfangsrille (13; 3, 5) aufweist, die sich in Umfangsrichtung (U) erstreckt, wobei an die mindestens eine Umfangsrille (13; 3, 5) in Querrichtung (Q) beidseitig Profilblöcke (14; 4a, 6a) angrenzen, die eine Profilsteifigkeit (S14; S4a, S6a) aufweisen, wobei in zumindest einer Umfangsrille (13; 3, 5)
- an einer ersten Rillenflanke (13a; 3a, 5a) in Umfangsrichtung (U) verteilt erste Zahnstrukturen (9a) voneinander beabstandet angeordnet sind, und
- an einer zweiten Rillenflanke (13b; 3b, 5b) in Umfangsrichtung (U) verteilt zweite Zahnstrukturen (9b) voneinander beabstandet angeordnet sind,
- die ersten Zahnstrukturen (9a) jeweils eine erste Zahnfläche (10a) aufweisen, die von der ersten Rillenflanke (13a; 3a, 5a) absteht oder hervorsteht, und
- die zweiten Zahnstrukturen (9b) jeweils eine zweite Zahnfläche (10b) aufweisen, die von der zweiten Rillenflanke (13b; 3b, 5b) absteht oder hervorsteht, wobei die erste Zahnfläche (10a) und die zweite Zahnfläche (10b) jeweils in radialer Richtung (R) konkav gekrümmt sind,
wobei die erste Zahnstruktur (9a) in Umfangsrichtung (U) eine erste Zahnbreite (B9a) und eine erste Zahnhöhe (H9a) über der ersten Rillenflanke (5a) aufweist, und
die zweite Zahnstruktur (9b) in Umfangsrichtung (U) eine zweite Zahnbreite (B9b) und eine zweite Zahnhöhe (H9b) über der zweiten Rillenflanke (5b) aufweist, wobei die mindestens eine Umfangsrille (13) eine schulterseitige Umfangsrille (5) ist, wobei sich die schulterseitige Umfangsrille (5) im Bereich einer Reifenschulter des Fahrzeugreifens (2) in Umfangsrichtung (U) erstreckt,
**dadurch gekennzeichnet, dass**
- die erste Zahnbreite (B9a) der ersten Zahnstruktur (9a) und die zweite Zahnbreite (B9b) der zweiten Zahnstruktur (9b) unterschiedlich sind, und/oder
- die erste Zahnhöhe (H9a) der ersten Zahnstruktur (9a) und die zweite Zahnhöhe (H9b) der zweiten Zahnstruktur (9b) unterschiedlich sind.

2. Fahrzeugreifen (2) nach Anspruch 1,
**dadurch gekennzeichnet, dass**
die mindestens eine Umfangsrille (13) eine zentrale Umfangsrille (3) ist, wobei sich die zentrale Umfangsrille (3) benachbart zu einer Äquatorialebene (C) des Fahrzeugreifens (2) in Umfangsrichtung (U) erstreckt, wobei
- die erste Zahnbreite (B9a) der ersten Zahnstruktur (9a) und die zweite Zahnbreite (B9b) der zweiten Zahnstruktur (9b) im Wesentlichen identisch sind, und/oder
- die erste Zahnhöhe (H9a) der ersten Zahnstruktur (9a) und die zweite Zahnhöhe (H9b) der zweiten Zahnstruktur (9b) im Wesentlichen identisch sind.

3. Fahrzeugreifen (2) nach Anspruch 2,
**dadurch gekennzeichnet, dass**
an die zentrale Umfangsrille (3) in Querrichtung (Q) zu beiden Seiten hin mittlere Profilblöcke (4a) angrenzen, wobei die mittleren Profilblöcke (4a) im Wesentlichen identische Profilsteifigkeiten (S4a) aufweisen.

4. Fahrzeugreifen (2) nach einem der vorhergehenden Ansprüche,
**dadurch gekennzeichnet, dass**
- die erste Zahnbreite (B9a) geringer ist als die zweite Zahnbreite (B9b), und/oder
- die erste Zahnhöhe (H9a) geringer ist als die zweite Zahnhöhe (H9b).

5. Fahrzeugreifen (2) nach einem der vorhergehenden Ansprüche,
**dadurch gekennzeichnet, dass**
an die schulterseitige Umfangsrille (3) in Querrichtung (Q) laufstreifeninnenseitig mittlere Profilblöcke (4a) und in Querrichtung (Q) laufstreifenaußenseitig schulterseitige Profilblöcke (6a) angrenzen, wobei eine Profilsteifigkeit (S4a) der mittleren Profilblöcke (4a) geringer ist als eine Profilsteifigkeit (S6a) der schulterseitigen Profilblöcke (6a).

6. Fahrzeugreifen (2) nach einem der vorhergehenden Ansprüche,
**dadurch gekennzeichnet, dass**
eine erste Steifigkeit (S9a) der ersten Zahnstruktur (9a) an die Profilsteifigkeit (S14; S4a) eines an die erste Rillenflanke (13a; 3a, 5a) der jeweiligen Umfangsrille (13; 3, 5) angrenzenden Profilblocks (14, 4a) derartig angepasst ist, dass unter ETRTO-Bedingungen die Druckunterschiede an gegenüberliegenden Blockkanten des Profilblocks (14, 4a) in der Reifenaufstandsfläche maximal 80 N/cm² betragen, und eine zweite Steifigkeit (S9b) der zweiten Zahnstruktur (9b) an eine Profilsteifigkeit (S14; S6a) eines an die zweite Rillenflanke (13b; 3b, 5b) der jeweiligen Umfangsrille (13; 3, 5) angrenzenden Profilblocks (14, 6a) derartig angepasst ist, dass unter ETRTO-Bedingungen die Druckunterschiede an gegenüberliegenden Blockkanten des Profilblocks (14, 6a) in der Reifenaufstandsfläche maximal 80 N/cm² betragen.

7. Fahrzeugreifen (2) nach Anspruch 6,
**dadurch gekennzeichnet, dass**
die erste Steifigkeit (S9a) der ersten Zahnstruktur (9a) und/oder die zweite Steifigkeit (S9b) der zweiten Zahnstruktur (9b) in Abhängigkeit der jeweiligen Zahnbreite (B9a, B9b) und/oder der jeweiligen Zahnhöhe (H9a, H9b) und/oder in Abhängigkeit des Materials der jeweiligen Zahnstruktur (9a, 9b) eingestellt ist.

## Claims

1. Vehicle tyre (2) having a tread (1), wherein the tread (1) has at least one circumferential channel (13; 3, 5) which extends in a circumferential direction (U), wherein the at least one circumferential channel (13; 3, 5) is adjoined at both sides in a transverse direction (Q) by profile blocks (14; 4a, 6a) which have a profile stiffness (S14; S4a, S6a), wherein, in at least one circumferential channel (13; 3, 5),
- first tooth structures (9a) are arranged spaced apart from one another on a first channel flank (13a; 3a, 5a) so as to be distributed in the circumferential direction (U), and
- second tooth structures (9b) are arranged spaced apart from one another on a second channel flank (13b; 3b, 5b) so as to be distributed in the circumferential direction (U),
- the first tooth structures (9a) each have a first tooth surface (10a) which projects or protrudes from the first channel flank (13a; 3a, 5a), and
- the second tooth structures (9b) each have a second tooth surface (10b) which projects or protrudes from the second channel flank (13b; 3b, 5b), wherein the first tooth surface (10a) and the second tooth surface (10b) are each concavely curved in a radial direction (R),
wherein the first tooth structure (9a) has a first tooth width (B9a) in the circumferential direction (U) and a first tooth height (H9a) above the first channel flank (5a), and
the second tooth structure (9b) has a second tooth width (B9b) in the circumferential direction (U) and a second tooth height (H9b) above the second channel flank (5b), wherein the at least one circumferential channel (13) is a shoulder-side circumferential channel (5), wherein the shoulder-side circumferential channel (5) extends in the circumferential direction (U) in the region of a tyre shoulder of the vehicle tyre (2),
**characterized in that**
- the first tooth width (B9a) of the first tooth structure (9a) and the second tooth width (B9b) of the second tooth structure (9b) are different, and/or
- the first tooth height (H9a) of the first tooth structure (9a) and the second tooth height (H9b) of the second tooth structure (9b) are different.

2. Vehicle tyre (2) according to Claim 1,
**characterized in that**
the at least one circumferential channel (13) is a central circumferential channel (3), wherein the central circumferential channel (3) extends in the circumferential direction (U) adjacent to an equatorial plane (C) of the vehicle tyre (2), wherein
- the first tooth width (B9a) of the first tooth structure (9a) and the second tooth width (B9b) of the second tooth structure (9b) are substantially identical, and/or
- the first tooth height (H9a) of the first tooth structure (9a) and the second tooth height (H9b) of the second tooth structure (9b) are substantially identical.

3. Vehicle tyre (2) according to Claim 2,
**characterized in that**
the central circumferential channel (3) is adjoined at both sides in the transverse direction (Q) by middle profile blocks (4a), wherein the middle profile blocks (4a) have substantially identical profile stiffnesses (S4a).

4. Vehicle tyre (2) according to one of the preceding claims,
**characterized in that**
- the first tooth width (B9a) is smaller than the second tooth width (B9b), and/or
- the first tooth height (H9a) is smaller than the second tooth height (H9b).

5. Vehicle tyre (2) according to one of the preceding claims,
**characterized in that**
the shoulder-side circumferential channel (3) is adjoined at the tread inner side in the transverse direction (Q) by middle profile blocks (4a) and at the tread outer side in the transverse direction (Q) by shoulder-side profile blocks (6a), wherein a profile stiffness (S4a) of the middle profile blocks (4a) is lower than a profile stiffness (S6a) of the shoulder-side profile blocks (6a).

6. Vehicle tyre (2) according to one of the preceding claims,
**characterized in that**
a first stiffness (S9a) of the first tooth structure (9a) is adapted to the profile stiffness (S14; S4a) of a profile block (14, 4a), that adjoins the first channel flank (13a; 3a, 5a) of the respective circumferential channel (13; 3, 5), in such a way that, under ETRTO conditions, the differences in pressure at opposite block edges of the profile block (14, 4a) within the tyre contact area is at most 80 N/cm², and a second stiffness (S9b) of the second tooth structure (9b) is adapted to a profile stiffness (S14; S6a) of a profile block (14, 6a), that adjoins the second channel flank (13b; 3b, 5b) of the respective circumferential channel (13; 3, 5), in such a way that, under ETRTO conditions, the differences in pressure at opposite block edges of the profile block (14, 6a) within the tyre contact area is at most 80 N/cm².

7. Vehicle tyre (2) according to Claim 6
**characterized in that**
the first stiffness (S9a) of the first tooth structure (9a) and/or the second stiffness (S9b) of the second tooth structure (9b) are/is set according to the respective tooth width (B9a, B9b) and/or the respective tooth height (H9a, H9b) and/or according to the material of the respective tooth structure (9a, 9b).

## Revendications

1. Pneu de véhicule (2) avec une bande de roulement (1), la bande de roulement (1) présentant au moins une rainure circonférentielle (13 ; 3, 5) qui s'étend dans la direction circonférentielle (U), des blocs de profil (14 ; 4a, 6a) étant adjacents à l'au moins une rainure circonférentielle (13 ; 3, 5) des deux côtés dans la direction transversale (Q), qui présentent une rigidité de profil (S14 ; S4a, S6a) ; dans au moins une rainure circonférentielle (13 ; 3, 5)
- des premières structures dentées (9a) étant agencées à distance les unes des autres, réparties sur un premier flanc de rainure (13a ; 3a, 5a) dans la direction circonférentielle (U), et
- des deuxièmes structures dentées (9b) étant agencées à distance les unes des autres, réparties sur un deuxième flanc de rainure (13b; 3b, 5b) dans la direction circonférentielle (U),
- les premières structures dentées (9a) présentant chacune une première surface de dent (10a) qui s'écarte ou dépasse du premier flanc de rainure (13a ; 3a, 5a), et
- les deuxièmes structures dentées (9b) présentant chacune une deuxième surface de dent (10b) qui s'écarte ou dépasse du deuxième flanc de rainure (13b ; 3b, 5b), la première surface de dent (10a) et la deuxième surface de dent (10b) étant chacune courbées de manière concave dans la direction radiale (R),
la première structure dentée (9a) présentant, dans la direction circonférentielle (U), une première largeur de dent (B9a) et une première hauteur de dent (H9a) au-dessus du premier flanc de rainure (5a), et
la deuxième structure dentée (9b) présentant, dans la direction circonférentielle (U), une deuxième largeur de dent (B9b) et une deuxième hauteur de dent (H9b) au-dessus du deuxième flanc de rainure (5b), l'au moins une rainure circonférentielle (13) étant une rainure circonférentielle côté épaulement (5), la rainure circonférentielle côté épaulement (5) s'étendant dans la zone d'un épaulement de pneu du pneu de véhicule (2) dans la direction circonférentielle (U),
**caractérisé en ce que**
- la première largeur de dent (B9a) de la première structure dentée (9a) et la deuxième largeur de dent (B9b) de la deuxième structure dentée (9b) sont différentes, et/ou
- la première hauteur de dent (H9a) de la première structure dentée (9a) et la deuxième hauteur de dent (H9b) de la deuxième structure dentée (9b) sont différentes.

2. Pneu de véhicule (2) selon la revendication 1,
**caractérisé en ce que**
l'au moins une rainure circonférentielle (13) est une rainure circonférentielle centrale (3), la rainure circonférentielle centrale (3) s'étendant dans la direction circonférentielle (U) au voisinage d'un plan équatorial (C) du pneu de véhicule (2),
- la première largeur de dent (B9a) de la première structure dentée (9a) et la deuxième largeur de dent (B9b) de la deuxième structure dentée (9b) étant essentiellement identiques, et/ou
- la première hauteur de dent (H9a) de la première structure dentée (9a) et la deuxième hauteur de dent (H9b) de la deuxième structure dentée (9b) étant essentiellement identiques.

3. Pneu de véhicule (2) selon la revendication 2,
**caractérisé en ce que**
des blocs de profil centraux (4a) sont adjacents à la rainure circonférentielle centrale (3) dans la direction transversale (Q) des deux côtés, les blocs de profil centraux (4a) présentant des rigidités de profil (S4a) essentiellement identiques.

4. Pneu de véhicule (2) selon l'une quelconque des revendications précédentes,
**caractérisé en ce que**
- la première largeur de dent (B9a) est inférieure à la deuxième largeur de dent (B9b), et/ou
- la première hauteur de dent (H9a) est inférieure à la deuxième hauteur de dent (H9b).

5. Pneu de véhicule (2) selon l'une quelconque des revendications précédentes,
**caractérisé en ce que**
des blocs de profil centraux (4a) sont adjacents à la rainure circonférentielle côté épaulement (3) dans la direction transversale (Q) du côté intérieur de la bande de roulement et des blocs de profil côté épaulement (6a) dans la direction transversale (Q) du côté extérieur de la bande de roulement, une rigidité de profil (S4a) des blocs de profil centraux (4a) étant inférieure à une rigidité de profil (S6a) des blocs de profil côté épaulement (6a).

6. Pneu de véhicule (2) selon l'une quelconque des revendications précédentes,
**caractérisé en ce que**
une première rigidité (S9a) de la première structure dentée (9a) est adaptée à la rigidité de profil (S14 ; S4a) d'un bloc de profil (14, 4a) adjacent au premier flanc de rainure (13a ; 3a, 5a) de la rainure circonférentielle respective (13 ; 3, 5) de telle sorte que, dans les conditions ETRTO, les différences de pression au niveau de bords de bloc opposés du bloc de profil (14, 4a) dans la surface de contact du pneu sont au maximum de 80 N/cm², et une deuxième rigidité (S9b) de la deuxième structure dentée (9b) est adaptée à une rigidité de profil (S14 ; S6a) d'un bloc de profil (14, 6a) adjacent au deuxième flanc de rainure (13b ; 3b, 5b) de la rainure circonférentielle respective (13 ; 3, 5) de telle sorte que, dans les conditions ETRTO, les différences de pression au niveau de bords de bloc opposés du bloc de profil (14, 6a) dans la surface de contact du pneu sont au maximum de 80 N/cm².

7. Pneu de véhicule (2) selon la revendication 6,
**caractérisé en ce que**
la première rigidité (S9a) de la première structure dentée (9a) et/ou la deuxième rigidité (S9b) de la deuxième structure dentée (9b) est réglée en fonction de la largeur de dent respective (B9a, B9b) et/ou de la hauteur de dent respective (H9a, H9b) et/ou en fonction du matériau de la structure dentée respective (9a, 9b).
